# EUROPÄISCHE PATENTSCHRIFT

(11) **EP 1 979 913 B1**
(45) Veröffentlichungstag und Bekanntmachung des Hinweises auf die Patenterteilung: **27.07.2016**
(21) Anmeldenummer: 06828723.4
(22) Anmeldetag: 21.12.2006
(51) Int. Cl.: G01Q 30/06, G01Q 40/00

(54) **VERFAHREN ZUM BETREIBEN EINES MESSSYSTEMS MIT EINEM RASTERSONDENMIKROSKOP UND MESSSYSTEM**
METHOD FOR OPERATING A MEASUREMENT SYSTEM CONTAINING A SCANNING PROBE MICROSCOPE, AND MEASUREMENT SYSTEM
PROCÉDÉ D'UTILISATION D'UN SYSTÈME DE MESURE COMPRENANT UN MICROSCOPE À SONDE À BALAYAGE ET SYSTÈME DE MESURE

(30) Priorität: 04.01.2006 DE 102006001086
(43) Veröffentlichungstag der Anmeldung: 15.10.2008
(73) Patentinhaber: JPK Instruments AG, 12099 Berlin (DE)
(72) Erfinder: JÄHNKE, Torsten, 17279 Lychen (DE); HAGGERTY, Michael, 10967 Berlin (DE)
(74) Vertreter: Bittner, Thomas L.
(86) Internationale Anmeldenummer: PCT/DE2006/002298
(87) Internationale Veröffentlichungsnummer: WO 2007/076828

(56) Entgegenhaltungen:
- EP-A2- 0 633 450
- WO-A-03/083876
- JP-A- 6 066 558
- FUJII T ET AL: "DEVELOPMENT OF A NEW FORCE MICROSCOPE WITH A FLUORESCENCE OPTICAL MICROSCOPE" THIN SOLID FILMS, ELSEVIER-SEQUOIA S.A. LAUSANNE, CH, Bd. 243, Nr. 1/2, 1. Mai 1994 (1994-05-01), Seiten 407-410, XP000471509 ISSN: 0040-6090
- KATE POOLE: "Tech08/06 - True integration of optical and atomic force microscopy" JPK INSTRUMENTS TECHNICAL REPORT, [Online] 2006, Seiten 1-4, XP002425426 Gefunden im Internet: URL:www.jpk.com/app-techReports/tech0806.p df> [gefunden am 2007-03-15]
- CHRISTIAN LÖBBE, KATE POOLE: "Two Microscopes, One Software" IMAGING & MICROSCOPY, [Online] Bd. 8, Nr. 4, November 2006 (2006-11), Seiten 43-44, XP002425427 Darmstadt ISSN: 1439-4243 Gefunden im Internet: URL:www.gitverlag.com/media/content/IM_040 6.pdf> [gefunden am 2007-03-19]

## Beschreibung

Die Erfindung betrifft ein Verfahren zum Betreiben eines Messsystems mit einem Rastersondenmikroskop, insbesondere einem Rasterkraftmikroskop, sowie ein Messsystem.

### Hintergrund der Erfindung

Die Rastersondenmikroskopie (SPM - "Scanning Probe Microscopy") ist eine Technik, bei der eine Messsonde eine zu untersuchende Messprobe abtastet und hierbei beispielsweise eine Topographie der Messprobe aufnimmt. In diesem Zusammenhang findet eine Relativbewegung zwischen Messsonde und Messprobe statt, die dadurch erreicht wird, dass mindestens die Messsonde oder mindestens die Messprobe bewegt wird. Üblicherweise wird die Relativbewegung als laterale Bewegung ausgeführt. Zusätzlich kann auch eine Relativbewegung in vertikaler Richtung stattfinden. Eine Form der Rastersondenmikroskopie ist die Rasterkraftmikroskopie (SFM - "Scanning Force Microscopy"). Bei einem hierfür verwendeten Rasterkraftmikroskop wird die Messsonde in einer Bauart von einem Cantilever gebildet, welcher eine feine Messspitze trägt.

Es ist von großem Vorteil, die Rastersondenmikroskopie mit der klassischen optischen Mikroskopie zu kombinieren, um die bei der Rastersondenmikroskopie gefundenen Messergebnisse besser Strukturen der Messprobe zuordnen zu können, die ihrerseits aus optischen Abbildungen der optischen Mikroskopie entnommen werden. Hierbei wird nach dem Stand der Technik eine optische Abbildung mit Hilfe der optischen Mikroskopie aufgenommen und bevorzugt digital abgespeichert. In ähnlicher Weise wird eine SPM-Abbildung im Rahmen der Rastersondenmikroskopie der gleichen Messprobe erzeugt und gespeichert. Die in den beiden Messungen erzeugten Abbildungen werden anschließend mittels eines Bildverarbeitungsprogramms zur Deckung gebracht. Hierfür müssen bestimmte Voraussetzungen erfüllt sein.

Zunächst müssen die optische Abbildung und die SPM-Abbildung sehr gut kalibriert sein. Für die SPM-Abbildung ist diese Anforderung bei vielen kommerziellen Geräten bereits aufgrund von Sensoren verwirklicht, welche die laterale Bewegung der Messsonde detektieren. Bei der optischen Abbildung wird üblicherweise auf eine genaue Kalibrierung verzichtet, insbesondere in den Lebenswissenschaften. Allerdings ist eine Kalibrierung auch möglich, beispielsweise mittels eines Objektivmikrometers.

Weiterhin müssen die Informationen aus der optischen Abbildung und der SPM-Abbildung vergleichbar sein. Oft ist dies der Fall, allerdings nicht zwangsläufig, da die Mechanismen der Kontrastentstehung in den beiden Messungen sehr verschieden sind. Hierdurch kann die beabsichtigte Deckung zwischen den beiden Abbildungen unmöglich werden.

Darüber hinaus muss die SPM-Abbildung einen Ausschnitt zeigen, auf dem genügend charakteristische Details zu erkennen sind, die in der optischen Abbildung ebenfalls zu identifizieren sind, um so eine Zuordnung zwischen den beiden Abbildungen zu ermöglichen. Diese Forderung ist eine starke Einschränkung, da die in Rastersondenmessungen erzeugten SPM-Abbildungen häufig nur einen kleinen Ausschnitt der zu untersuchenden Messprobe zeigen. Größere Bereiche der zu untersuchenden Messprobe können bei der Rastersondenmikroskopie häufig nicht erfasst werden, ohne dass hierbei die Messsonde beschädigt wird. Bei manchen experimentellen Untersuchungen wird eine SPM-Abbildung nicht erzeugt, da nur an einem einzelnen oder mehreren einzelnen Orten auf der Messprobe eine Kraft-Abstands-Kurve gemessen wird.

Insgesamt ist das vorangehend beschriebene Verfahren der Zuordnung zwischen Bildpunkten in der mittels einer optischen Aufnahmeeinrichtung gewonnenen optischen Abbildung und den Messergebnissen der Rastersondenmikroskopie ungenau und von nur bedingter Aussagekraft.

Es ist weiterhin bekannt, im Rahmen der Rastersondenmikroskopie als Orientierungshilfe bei der Positionierung der Messsonde relativ zu der zu untersuchenden Messprobe eine Videobildaufnahme zu nutzen, welche eine optische Abbildung eines Messabschnitts der Oberfläche der Messprobe mit der hierauf positionierten Messsonde zeigt. Hierbei treten Probleme jedoch dahingehend auf, dass die Messsonde in der Regel einen Teilbereich der Videoabbildung abschattet, wodurch eine Orientierung für das Positionieren der Messsonde sehr erschwert wird. Darüber hinaus können die Grenzen der Videoabbildung so nur schwer abgeschätzt werden.

Das Dokument WO 03/083876 A beschreibt ein Verfahren zum Ausrichten von Spitzen eines Rastersondenmikroskops.

Das Dokument JP/ H06-66558 A beschreibt eine Vorrichtung zum Ausmessen von Defekten eines Speichermediums (z. B. einer Diskette).

### Zusammenfassung der Erfindung

Aufgabe der Erfindung ist es, ein verbessertes Verfahren zum Betreiben eines Messsystems mit einem Rastersondenmikroskop sowie ein Messsystem mit einem Rastersondenmikroskop zu schaffen, bei denen eine exakte Positionierung der Messsonde relativ zu einer zu untersuchenden Messprobe erleichtert ist.

Diese Aufgabe wird erfindungsgemäß durch ein Verfahren zum Betreiben eines Messsystems mit einem Rastersondenmikroskop nach dem unabhängigen Anspruch 1 sowie ein Messsystem mit einem Rastersondenmikroskop nach dem unabhängigen Anspruch 10 gelöst.

Die Erfindung umfasst den Gedanken, beim Betreiben eines Messsystems mit einem Rastersondenmikroskop, insbesondere einem Rasterkraftmikroskop, auf einer Anzeigevorrichtung eine mit Hilfe einer optischen Aufnahmeeinrichtung, beispielsweise einer CCD-Kamera, aufgenommene, optische Abbildung eines Messabschnitts einer zu untersuchenden Messprobe darzustellen. Auf die Auswahl einer Position in der optischen Abbildung, was ein Benutzer beispielsweise mit Hilfe einer Tastatur, einer Maus oder auf einer Berührung der Anzeigevorrichtung ausführen kann, wird eine für eine Rastersondenmessung konfigurierte Messsonde mittels einer die Messsonde und die Messprobe relativ zueinander bewegenden Verlagerungsvorrichtung zu einer Messposition verlagert, die der in der optischen Abbildung ausgewählten Position gemäß einer Koordinatentransformation, welche auch als Ortszuordnung oder Ortstransformation bezeichnet werden kann, zugeordnet ist, indem die Verlagerungsvorrichtung der Koordinatentransformation entsprechend gesteuert wird. Die Koordinatentransformation, welche zuvor ermittelt wurde, bildet eine Zuordnung zwischen einem Koordinatensystem der optischen Abbildung und einem Koordinatensystem eines von Verlagerungspositionen der Messsonde und der Messprobe aufgespannten Raumes, wobei die Verlagerungspositionen die Messposition umfassen. Die Ermittlung der Koordinatentransformation erfolgt bevorzugt experimentell, indem aus einer Zuordnung zwischen einem oder mehreren Bildpunkten in einer oder mehreren optischen Abbildungen einerseits und zugehörigen Messpositionen in der Anordnung von Messsonde und Messprobe andererseits eine verallgemeinerte Transformationsregel abgeleitet wird, mit der die beiden Koordinatensysteme aufeinander abbildbar sind. Diese wird dann der Steuereinrichtung des Rastersondenmikroskops "zur Vcrfügung gestellt", um die Verlagerungseinrichtung entsprechend zu Steuern, wenn eine Auswahl von einem oder mehreren Bildpunkten in einer optischen Abbildung bei einer rastersondenmikroskopischen Untersuchung erfasst wird.

Während der Rastersondenmikroskopie ist es so ermöglicht, die Messsonde gegenüber der zu untersuchenden Messprobe exakt in einer oder mehreren Messpositionen anzuordnen, die ihrerseits einer jeweils zugeordneten Positionen in der optischen Abbildung entsprechen. Wenn der Benutzer des Rastersondenmikroskops beispielsweise eine Rastersondenmessung in einem Bereich der Messprobe ausführen möchte, der auf der optischen Abbildung als charakteristischer Punkt hervortritt, beispielsweise wegen seines hohen Kontrastverhältnis zu ihn umgebenden Bildpunkten in der optischen Abbildung, so ist lediglich dieser Punkt in der optischen Abbildung auszuwählen, und die Messsonde wird anschließend mit Hilfe der Verlagerungsvorrichtung unter Berücksichtigung der Koordinatentransformation exakt zu dem Messpunkt verfahren, welcher auf der Messprobe dem in der optischen Abbildung ausgewählten Punkt entspricht.

Für die Koordinatentransformation können verschiedene Transformationsverfahren benutzt werden, die eine Orts- oder Positionszuordnung zwischen optischer Abbildung einerseits und Messraum mit Messprobe und Messsonde andererseits realisieren und die hinsichtlich ihrer hierbei genutzten mathematischen Werkzeuge als solche dem Fachmann in verschiedenen Ausgestaltungen bekannt sind. Derzeit bekannte Transformationsverfahren sind beispielsweise die Verwendung einer Matrix für den linearen Fall. Für den nichtlinearen Fall werden beispielsweise Transformationen mittels mehrdimensionaler Polynomvorschriften genutzt, zum Beispiel eine zweidimensionale Polynomvorschrift für jeden zu transformierenden Punkt.

Eine bevorzugte Ausführungsform sieht vor, dass die Koordinatentransformation mittels einer Softwareimplementierung in einer Steuerungsvorrichtung zur Verfügung gestellt ist, die ihrerseits mit der Anzeigevorrichtung und der Verlagerungsvorrichtung zusammenwirkt. Im Ergebnis der Koordinatentransformation ist eine Kalibrierung zwischen der Darstellung der optischen Abbildung auf der Anzeigevorrichtung einerseits und der Positionierung der Messsonde relativ zur zu untersuchenden Messprobe andererseits geschaffen, die eine exakte, der Auswahl in der optischen Abbildung entsprechende Verlagerung der Messsonde gegenüber der Messprobe sicherstellt. Es kann vorgesehen sein, die Koordinatentransformation während der Rastersondenmikroskopuntersuchung zu überprüfen oder wahlweise einmal oder mehrmals zu erneuern, was dann eine Art Neukalibrierung darstellt.

Eine bevorzugte Weiterbildung der Erfindung sieht vor, dass ein Rastersondenmesswert für die Messposition erfasst wird, indem beim Verlagern in die Messposition eine an der Messsonde gebildet Messspitze in die Messposition gebracht wird.

Bei einer zweckmäßigen Ausgestaltung der Erfindung kann vorgesehen sein, dass die Messsonde zumindest teilweise in der optischen Abbildung auf der Anzeigevorrichtung dargestellt wird.

Eine vorteilhafte Ausführungsform der Erfindung sieht vor, dass der Messabschnitt in der optischen Abbildung ohne die Messsonde dargestellt wird. Dies kann beispielsweise realisiert werden, indem die Messsonde vollständig aus dem Bereich der optischen Abbildung verlagert wird. Da in der Regel der für Messzwecke zum Abtasten (Scannen) genutzte Verlagerungsmechanismus hierfür nicht ausreichen wird oder nur die Messprobe bewegt, kann ein zweiter Verlagerungsmechanismus für eine Grobverlagerung der Messsonde vorgesehen sein. Eine weitere bevorzugte Ausführung sieht vor, die Messsonde an verschiedene Positionen zu verlagern und jeweils eine optisches Abbildung der Messprobe zusammen mit der Messsonde aufzunehmen. Anschließend können alle optischen Abbildungen in einen Median-Filter geben werden, der die Messsonde aus den ursprünglichen Abbildungen herausfiltert, da sie ein Ob jekt ist, dass in jeder der optischen Abbildung unterschiedlich dargestellt ist. Median-Filtermechanismen sind als solche in verschiedenen Ausgestaltungen bekannt.

Bevorzugt sieht eine Fortbildung der Erfindung vor, dass als optische Abbildung eine momentane optische Aufnahme in einer Live-Betriebsart dargestellt wird, was beispielsweise mittels Videoaufnahmen implementierbar ist.

Bei einer vorteilhaften Ausgestaltung der Erfindung kann vorgesehen sein, dass auf der Anzeigeeinrichtung eine Rastersondenmessbild mit Rastersondenmesswerten dargestellt wird, wahlweise in einer wenigstens teilweise überlagernden Darstellung von optischer Abbildung und Rastersondenmessbild entsprechend der Koordinatentransformation.

Eine Weiterbildung der Erfindung kann vorsehen, dass die Darstellung der optische Abbildung des Messabschnitts auf der Anzeigeeinrichtung wiederholt erneuert wird.

Bevorzugt sieht eine Fortbildung der Erfindung vor, dass die Koordinatentransformation ermittelt wird, indem ein oder mehrere Bildpunkte aus einem oder mehreren optischen Abbildungen einerseits und zugehörige Messpositionen in der Anordnung von Messsonde und Messprobe andererseits miteinander verglichen werden und hieraus eine verallgemeinerte Transformationsregel abgeleitet wird. Die Kalibrierung wird in dieser Ausführungsform also ausgeführt, ohne dass hierzu rastersondenmikroskopische Messwertaufnahmen notwendig sind.

Bei einer vorteilhaften Ausgestaltung der Erfindung kann vorgesehen sein, dass die eine oder die mehreren optischen Abbildungen als mindestens eine Abbildungsart ausgewählt aus der folgenden Gruppe von Abbildungsarten aufgenommen werden: Fluoreszenz-Abbildung, Durchlichtabbildung und Ramanspektroskopie-Abbildung. Die optischen Abbildungen werden bevorzugt mit einer der genannten optischen Untersuchungsmethoden erzeugt. Auch eine Verwendung von Abbildungen mehrerer der Untersuchungsarten kann vorgesehen sein.

Im folgenden werden weitere bevorzugte Ausgestaltungen der Erfindung näher erläutert, insbesondere zweckmäßige Ausführungsformen der Kalibrierung zwischen optischer Abbildung einerseits und Messsondenverlagerung relativ zur Messprobe andererseits.

Für die SPM-Messung wird mit den Bewegungsachsen der Verlagerungsvorrichtung, mit der Messsonde und Messprobe relativ zueinander bewegt werden können, ein kartesisches Koordinatensystem für den von den Verlagerungspositionen der Messsonde und der Messprobe aufgespannten Raum definiert. Hierbei kann die Verlagerungsvorrichtung durchaus auch Drehungen der durch sie bewegten Bauteile veranlassen, was auch über eine Transformation in ein kartesisches Koordinatensystem abbildbar ist. Die Rückführung auf ein kartesisches Koordinatensystem ist nicht ein notwendiger Bestandteil des Verfahrens, erleichtert aber das Verständnis. In vielen Fällen ist die Ausrichtung der Verlagerungsvorrichtung zur optischen Achse von Messung zu Messung unterschiedlich, so dass eine werkseitige Kalibrierung unmöglich ist. Mit dem Ursprung der kartesischen Koordinatensysteme verhält es sich ähnlich. In den meisten Fällen wird beispielsweise die Messsonde vom Benutzer manuell eingelegt, und der Ort der Wechselwirkung zwischen Messsonde und Messprobe ist demnach von Messung zu Messung verschieden.

Im Fall einer Verlagerungsvorrichtung, bei der die Messsonde lateral bewegt wird, können mit der Messsonde im Koordinatensystem der Verlagerungsvorrichtung nun zwei potentielle oder wirkliche Messpositionen angefahren werden. Wenn den zwei Positionen in der optischen Abbildung zugehörige Bildpunkte zugeordnet werden können, definiert diese Zuordnung eine Transformationsvorschrift zwischen Bildpunkten der optischen Abbildung und Messpositionen der Messsonde, die ihrerseits bestimmten Stellungen der Verlagerungsvorrichtung entsprechen, d. h. bestimmten Einstell- oder Steuerwerten der Verlagerungsvorrichtung. Dieser einfache Fall, dass nur zwei Punkte genutzt werden, gilt natürlich nur, wenn lediglich eine Translation und eine Rotation durchgeführt werden müssen. Die Koordinatentransformation kann dann während einer folgenden Rastersondenmikroskopuntersuchung genutzt werden, um die Messsonde einer Auswahl in der optischen Abbildung entsprechend mit Hilfe der Verlagerungsvorrichtung gegenüber der Messprobe zu positionieren. Schon zur Laufzeit der experimentellen Rastersondenmikroskopuntersuchung können so Informationen aus beiden Untersuchungsmethoden, nämlich der optischen Untersuchung der Messprobe und der rastersondenmikroskopischen Untersuchung, miteinander verglichen werden. Für den Fall, dass eine kompliziertere Transformation durchgeführt werden muss, müssen auch entsprechend mehr Punkte bestimmt werden.

Hinsichtlich der konkreten Abbildungsaufbereitung und Darstellung auf der Anzeigevorrichtung bestehen verschiedene Wahlmöglichkeiten. Um den Benutzer des Rastersondenmikroskops eine gewohnte Ansicht zu bieten, kann vorgesehen sein, die optische Abbildung so zu begrenzen, dass eine rechteckige Abbildung zu sehen ist, deren Seiten parallel zu den beiden Bewegungsachsen der mit Hilfe der Verlagerungsvorrichtung ausgeführten lateralen Bewegung sind.

Es kann auch vorgesehen sein, dass die optische Abbildung nicht als eine momentane Abbildung oder Live-Abbildung gezeigt wird, wenn beispielsweise die die Messprobe abrasternde Messsonde als sehr unruhig empfunden wird. Zur gewünschten Orientierung auf der Messprobe ist es bei einer sich nicht zu schnell ändernden Messprobe zweckmäßig, eine vorherige Bildaufnahme zu machen, nämlich eine optische Bildaufnahme vor dem Anfahren von Messpositionen der Messsonde. Diese Überlegung trifft auch für den Fall zu, dass die Messprobe gescannt wird. Bei einer vorherigen Bildaufnahme ist es dann vorteilhaft, die Messsonde mit der Verlagerungsvorrichtung soweit wie möglich aus dem Scanbereich zu entfernen, damit möglichst viele Details der Oberfläche der Messprobe ungestört dargestellt werden können. Dieses ist bei einer Durchlichtanwendung von größerer Bedeutung als bei einer Messung nach der Fluoreszenzmethode.

Es kann auch vorgesehen sein, dass auf der Anzeigevorrichtung mehrere Abbildungen, seien es optische Abbildungen und / oder SPM-Abbildungen, übereinander dargestellt werden, wobei einzelne Abbildungen ab- und zuschaltbar sind. Zweckmäßig ist es in diesem Zusammenhang, die mehreren Abbildungen einem gemeinsamen Koordinatensystem entsprechend darzustellen, so dass übereinanderliegende Bildpunkte der verschiedenen Abbildungen der gleichen Position auf der Messprobe entsprechen. Hierbei ist es von Vorteil, wenn teiltransparente Darstellungen der Abbildungen verwendet werden. Wenn die SPM-Abbildung ausgeblendet ist, ist eine sehr gute Orientierung möglich, das heißt, nur die optische Abbildung wird angezeigt. Neben dem Ausblenden des einen oder der mehreren SPM-Abbildungen besteht weiterhin die Möglichkeit, farbliche Codierungen von optisch angezeigten Informationen zu verwenden.

Darüber hinaus können auf der Anzeigevorrichtung auch weitere Informationen dargestellt werden. Hierzu gehören beispielsweise Punkte, an denen eine Rastersondenmikroskopie durchgeführt wurde, aber auch Linien, an denen eine Manipulation stattgefunden hat. Den so dargestellten Bildpunkten auf der Anzeigevorrichtung können in üblicher Weise elektronische Daten zugeordnet werden, auf die über Menüfunktionen zugegriffen werden kann, beispielsweise indem die dargestellten Bildpunkte angeklickt werden.

Es können Situationen auftreten, bei denen der Ort einer Wechselwirkung zwischen Messsonde und Messprobe nicht hinreichend genau bestimmt werden kann. Es kann auch sein, dass bei der Koordinatentransformation zur Zuordnung von Positionen in der optischen Abbildung einerseits und Positionen in dem Koordinatensystem der Messsonde und der Messprobe andererseits anstelle der bevorzugten Nutzung des Ortes der Wechselwirkung, also des Ortes im Bereich der Messspitze an der Messsonde, eine andere Position als Referenzpunkt verwendet wird. In diesem Fall muss die Koordinatentransformation den Abstand zwischen Ort der Messspitze und Referenzpunkt berücksichtigen. Um diesen Abstand, der einem Verschiebevektor zugeordnet werden kann, festzustellen, bestehen mehrere Optionen. Beispielsweise kann hierzu eine weitere experimentelle Untersuchung genutzt werden, insbesondere eine Elektronenmikroskopuntersuchung. Auch können Informationen aus dem Datenblatt der Messsonde verwendet werden. Es kann weiterhin vorgesehen sein, einen Abbildungsvergleich durchzuführen. Insbesondere bei einer Messprobe mit vielen ähnlichen charakteristischen Merkmalen oder auch periodisch wiederkehrenden Mustern ist eine wesentliche Verbesserung gegenüber einem Abbildungsvergleich ohne weitere Anhaltspunkte erreichbar. Voraussetzung hierfür ist jedoch eine vergleichbare Information aus beiden Untersuchungsmethoden.

Es hat sich gezeigt, dass eine lineare Abbildung bei der Koordinatentransformation den unterschiedlichen Untersuchungsumgebungen in bestimmten Fällen nur teilweise Rechnung trägt. Es kann deshalb vorgesehen sein, bei der Koordinatentransformation neben einer Verschiebung und einer Winkeltransformation zusätzlich noch eine weitere Anpassung zu berücksichtigen, beispielsweise eine polynomische Anpassung zweiter Ordnung. Untersuchungen zeigten, dass bei einer üblichen Messapparatur bevorzugt bis zu 25 Messpunkte nutzbar sind, um eine ausreichend genaue Koordinatentransformation sicherzustellen.

Das Messsystem mit Rastersondenmikroskop und der Aufnahmeeinrichting zum Aufnehmen von optischen Abbildungen verfügt über eine Steuereinrichtung, mit der die ermittelte Koordinatentransformation implementiert ist, so dass nach der Auswahl einer Position in der angezeigten optischen Abbildung Messsonde und zu untersuchende Messprobe mit Hilfe der Verlagerungseinrichtung entsprechend positioniert werden. Die zum Ansteuern der Verlagerungsvorrichtung notwendigen Steuersignale initiieren die Steuereinrichtung gemäß der Implementierung der Koordinatentransformation. Darüber hinaus kann vorgesehen sein, dass die Steuereinrichtung für ein Vorabkalibrierungsverfahren konfiguriert ist, in welchem die Koordinatentransformation ermittelt wird. Hierzu können bevorzugt softwarebasierte Applikationen in der Steuereinrichtung implementiert sein, die insbesondere dazu dienen, optische Bildpunkte und hierzu gehörige Positionierungen von Messsonde und Messprobe mittels der Verlagerungseinrichtung zu erfassen und hieraus wahlweise eine Transformationsregelung abzuleiten. Ein derartiges Vorkalibrierungsverfahren kann von dem Benutzer des Messsystems dann auch während des Durchführens einer rastersondenmikroskopischen Untersuchung erneut genutzt werden, um eine Nachkalibrierung durchzuführen.

Das beschriebene Verfahren ist insbesondere für beliebige Arten der Rastersondenmikroskopie nutzbar. Neben der Rasterkraftmikroskopie kann die Verwendung bei anderen mikroskopischen Untersuchungen vorgesehen sein, so zum Beispiel der Rasterphotonen-Mikroskopie (SPhM - "Scanning Photonic Microscopy"), bei der mit Hilfe einer optischen Pinzette Abbildungen einer Messprobe aufgenommen werden, oder der Rasternahfeldmikroskopie (SNOM - "Scanning Nearfield Optical Microscopy"). Das Verfahren ist auch nutzbar, wenn im Ausnahmefall in der optischen Abbildung nur ein Punkt bekannt ist und genau in diesem Punkt der Messprobe die rastersondenmikroskopische Untersuchung durchgeführt werden soll. In diesem Fall findet eine Ortszuordnung nur zwischen zwei Positionen statt, nämlich einem Bildpunkt in der optischen Abbildung und einer Messposition.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig. 1: eine schematische Darstellung eines Abschnitts einer Messanordnung,
- Fig. 2: eine schematische Darstellung eines gleichseitigen Dreiecks in drei verschiedenen Koordinatensystemen,
- Fig. 3: eine schematische Darstellung zur Kalibrierung eines Winkels und eines Offsets im Fall eines Sondenscanners,
- Fig. 4: eine optische Abbildung eines Cantilevers mit Messspitze und Referenzpunkt,
- Fig. 5: eine weitere optische Abbildung des Cantilevers mit Messspitze und Referenzpunkt,
- Fig. 6: eine andere optische Abbildung mit dem Cantilever,
- Fig. 7: ein Ablaufdiagramm und
- Fig. 8: eine schematische Darstellung eines Meßsystems.

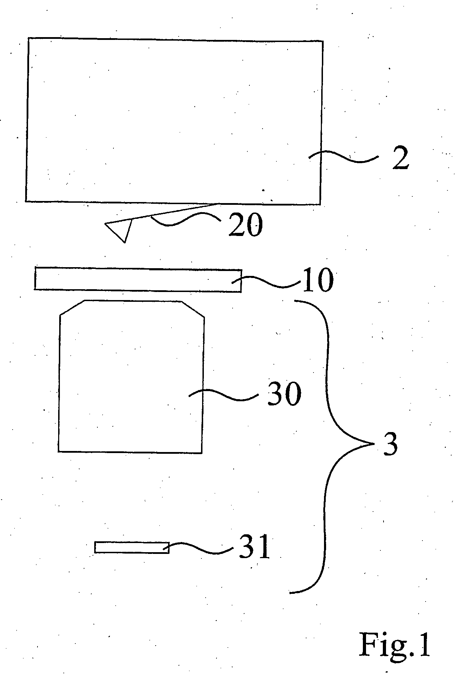

Fig. 1 zeigt eine schematische Darstellung eines Abschnitts einer Messanordnung mit verschiedenen Koordinatensystemen. Einer zu untersuchenden Messprobe 10 ist ein Koordinatensystem Σ₁ zugeordnet. Ein weiteres Koordinatensystem Σ₂ ist einer Messsonde 20 zugeordnet, die an einer Halteeinrichtung 2 gehalten und für eine rastersondenmikroskopische Untersuchung der Messprobe 10 konfiguriert ist. Gemäß einer alternativen Betrachtungsweise kann einer Anordnung mit Messprobe 10 und Messsonde 20 auch ein gemeinsames Koordinatensystem zugeordnet werden. Eines der beiden Koordinatensysteme Σ₁, Σ₂ ist, relativ zu einem Beobachter 3 unbewegt, je nachdem, ob die Messsonde 20 oder / oder die Messprobe 10 bei der Positionierung relativ zueinander bewegt werden. Der Bcobachter 3 wird hier beispielhaft und vereinfachend durch ein Objektiv 30 und einen CCD-Chip 31 skizziert, die ein System zum Aufnehmen von optischen Abbildungen der Messprobe 10 bilden. Ein anderes Koordinatensystem Σ₃ ist dem Beobachter 3 zugeordnet.

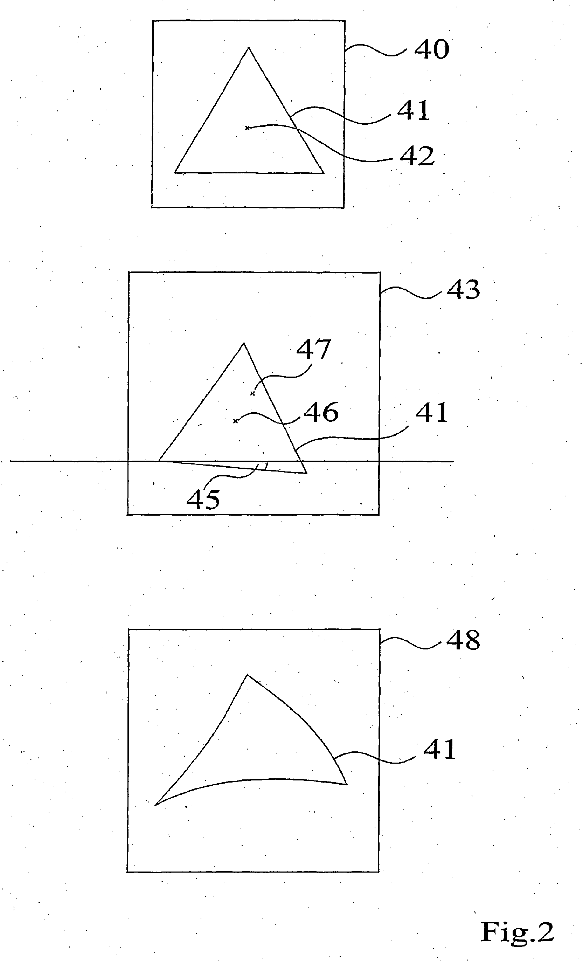

Fig. 2 zeigt eine schematische Darstellung eines gleichseitigen Dreiecks in drei verschiedenen Koordinatensystemen. Das gleichseitige Dreieck, welches in Fig. 2 mit dem Bezugszeichen 41 bezeichnet ist, bildet ein angenommenes Untersuchungsobjekt, welches in SPM-Abbildung (oberes Bild), einer optischen Abbildung (mittleres Bild) sowie einer weiteren optischen Abbildung (unteres Bild) gezeigt ist.

Unter der Annahme, dass es sich bei dem Dreieck 41 um eine reale Struktur handelt, die sowohl mittels optischer Untersuchung als auch mittels Rastersondenmikroskopie untersucht werden kann, so dass wenigstens eine optische Abbildung und eine Abbildung der Messergebnisse der Rastersondenmikroskopie (SPM-Abbildung) erzeugt werden, zeigt das obere Bild in Fig. 2 eine SPM-Abbildung 40 mit einer mit Hilfe von Randlinien angedeuteten Scan- oder Abtastgröße, bei der aufgrund einer kalibrierten Verlagerungsvorrichtung, mit der Messsonde und Messprobe relativ zucinander verlagert werden, ein gleichseitiges Dreieck 41 dargestellt. ist. Ein Ursprung 42 befindet sich in der Mitte des gleichseitigen Dreiecks 41, die der Einfachheit halber mit der Mitte der SPM-Abbildung 40 übereinstimmt.

Im mittleren Bild ist in Fig. 2 ein optische Abbildung 43 des Dreiecks 41 gezeigt, bei dem keine optischen Abbildungsfehler zum Tragen kommen. Hier kommt es lediglich zu einer Drehung des Dreiccks 41 um einen Winkel 45 und einer Verschiebung des Mittelpunkts des Dreiecks 41 zum Punkt 46 relativ zum Ursprung 47 der optischen Abbildung 43, der wiederum in der Mitte der Abbildung sei.

Im unteren Bild ist in Fig. 2 eine weitere optische Abbildung 48 des Dreiccks 41 gezeigt, wobei es bei dieser optischen Aufnahme zu optischen Verzerrungen kommt. Es wird deutlich, dass eine simple Transformation in Form einer Rotation oder Translation nicht ausreicht, um das Dreicck aus der weiteren optischen Abbildung im unteren Bild in Fig. 2 mit dem Dreieck in der SPM-Abbildung 40 im oberen Bild in Fig. 2 zur Deckung zu bringen.

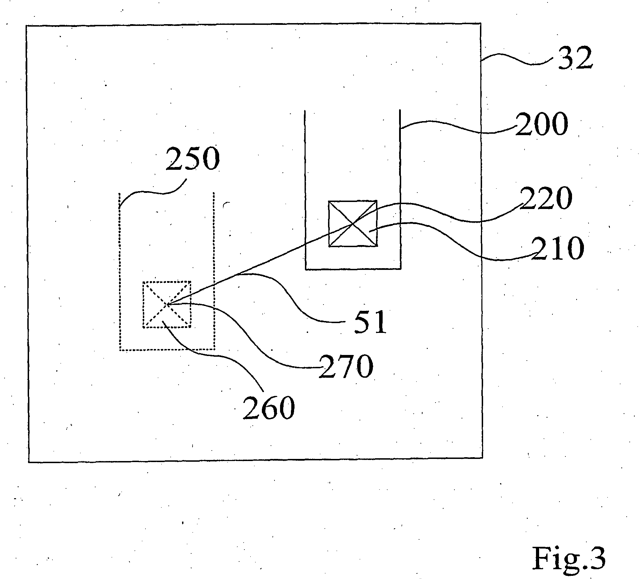

Fig. 3 zeigt eine schematische Darstellung zur Kalibrierung eines Winkels und eines Offsets mittels einer Scaneinrichtung eines Rastersondenmikroskops- Mit Hilfe der Scaneinrichtung werden Messsonde und Messprobe bei einer rastorsondenmikroskopischen Untersuchung relativ zueinander bewegt. Es ist eine optische Abbildung 32 einer als Cantilever 200 ausgeführten Messsonde gezeigt, die mittels des CCD-Chips 31 aufgenommen wird. Der Cantilever 200 weist eine pyramidenförmigen Messspitze 210 auf, deren Spitze einen Referenzpunkt 220 bildet. Der Einfachheit halber ist hier wie auch in den folgenden Figuren nur der vordere Teil des Cantilevers 200 dargestellt. Mittels einer Verschiebung mit Hilfe der Referenz um einen Vektor 51 wird der Cantilever 200 zur einer geänderten Position, die mit Hilfe von gestrichenten Linien 250, 260, 270 dargestellt ist. Mittels der Position des Referenzpunktes 220, 270 auf der optische Abbildung 32 kann nun eine Transformation (Translation und Rotation) der optischen Abbildung 32 in den Raum der Referenz durchgeführt werden nämlich das der Anordnung mit Cantilever 200 und zu untersuchender Messprobe zugeordnete Koordinatensystem. Dieser ist dann hinreichend genau, wenn die optische Abbildung 32 nicht stärker verzerrt als die gewünschte Auflösung der Rastersondenmikoskopmessung dargestellt ist.

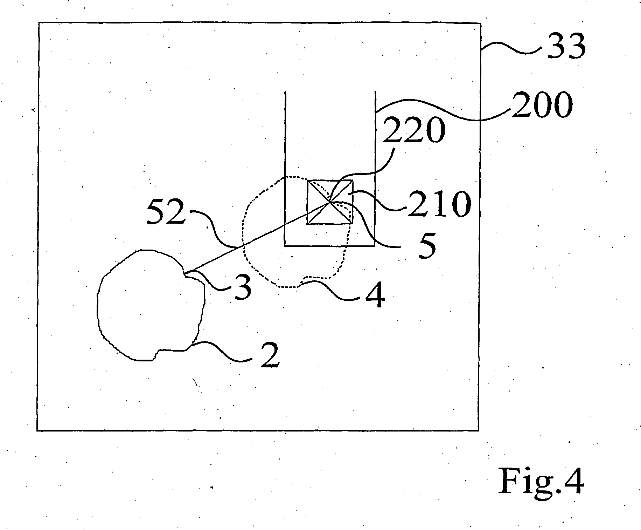

Fig. 4 zeigt eine weitere optische Abbildung 33 des Cantilevers 200 mit Mcssspitze 210 und Referenzpunkt 220, der aber nun ortsfest ist, da die Messprobe 10 bewegt wird. Ein sichtbarer Teil 2 der Messprobe 10 umfasst einen markanten Punkt 3, der mittels einer Verschiebung der Referenz um einen Vektor 52 in eine neue Position 4, 5 überführt wird. Es ist hier der oben dargelegte Idealfall dargestellt, dass der markante Punkt 5 genau mit dem Referenzpunkt 220, nämlich der Spitze des Cantilevers 200, übereinstimmt, der auch für die Wechselwirkung verantwortlich ist. Mittels der Positionen des Referenzpunktes 220 und des markanten Punktes 3, 5 kann nun wiederum die eine Transformation (Translation und Rotation) der weiteren optischen Abbildung 33 in den Raum der Referenz durchgeführt werden.

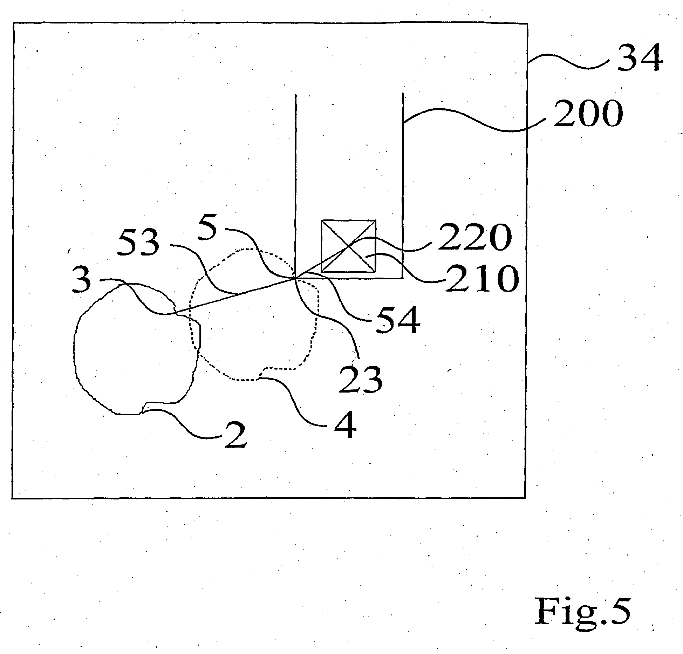

Fig. 5 zeigt wieder die Situation wie in Fig. 4 in einer optischen Abbildung 34, allerdings wird num der markante Punkt 3 von der Referenz um den Vektor 53 in eine neue Position zu einer Ecke 23 des Cantilevers 200 bewegt, die bier als Referenzpunkt, dient. Ist nun der Vcktor 54 bekannt, so ist auch hier die in Verbindung mit Fig. 4 beschriebene Koordinatentransformation möglich.

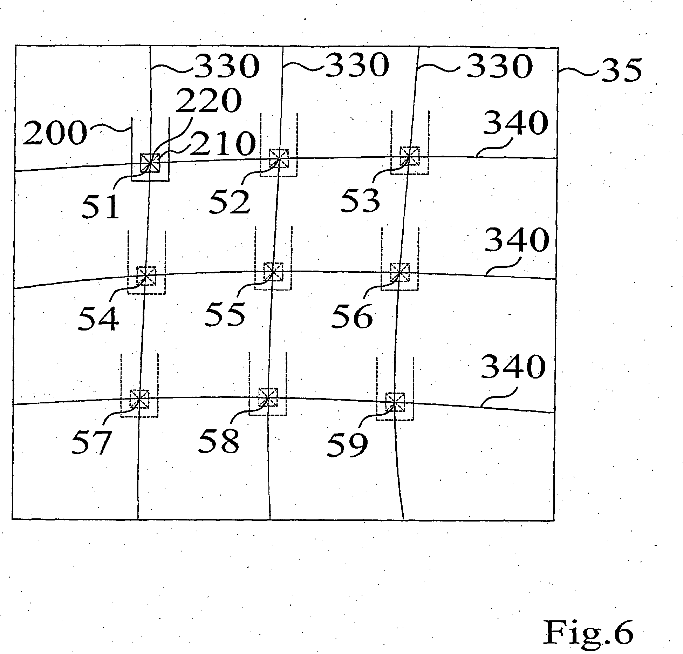

Fig. 6 zeigt eine andere optische Abbildung 35 mit dem Cantilever 200, die mittels des CCD-Chips 31 aufgenommen wurde.

Sukzessive wird der Referenzpunkt 220 von einer Referenz an neun verschiedene Orte verlagert, die gestrichelt eingezeichnet sind. Diese Orte sind die vier Ecken, die vier Seitenmittelpunkte und der Mittelpunkt eines Quadrates. Diese Punkte sind die Schnittpunkte dreier Parallelen mit identischem Abstand und dreier hierzu orthogonalen Parallelen mit identischem Abstand. In der anderen optische Abbildung 35 sind die senkrechten Linien 330 nun nicht mehr parallel zueinander und die waagerechten Linien 340 ebenfalls nicht. Demnach sind auch Messpositionen 51, ..., 59 nicht mehr, wie erwartet, auf einem Quadrat angeordnet. Die Lage der Punkte erlaubt nun die Berechnung einer Transformationsanweisung zur Transformation der anderen optischen Abbildung 35 in den Raum der Referenz und damit in das Koordinatensystem des Rasterkraftmikroskops. Es kann auch eine andere Punkteanordnung gewählt werden. Eine einmal gewonnene Transformationsanweisung bleibt in der Regel erhalten, wenn sich die Optik für die Aufnahme der optischen Abbildung nicht wesentlich ändert. Es ist demnach möglich, die Messprobe grob zu verstellen und auf eine neue optische Abbildung dieselbe Transformation anzuwenden. Für den Fall, dass der Cantilever 200 in irgendeiner Form bewegt wird, außer durch die Referenz selbst, muss dann nur noch die einfache Transformation nach dem oben beschriebenen Verfahren durchgeführt werden.

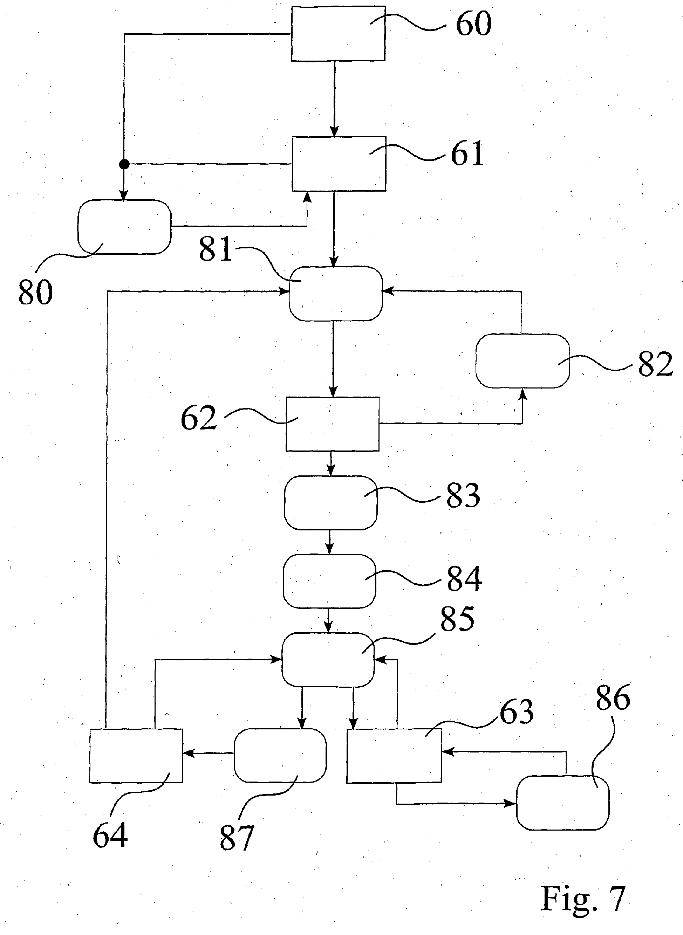

Fig. 7 zeigt ein Ablaufdiagramm zur Erläuterung eines Verfahrens.

Zunächst wird gemäß Teilschritt 60 geprüft, ob die Messsonde 20 in der optischen Abbildung sichtbar ist. Ist die Messsonde 20 in der optischen Abbildung sichtbar, wird im Teilschritt 61 geprüft, ob dieses für alle geplanten Messpositionen der Messsonde 20 bei der rastersondenmikroskopische Untersuchung der Fall ist. Wenn auch diese Bedingung erfüllt ist, kann direkt mit der eigentlichen rastersondenmikroskopischen Messung begonnen werden.

Ist eine der beiden vorgenannten Bedingungen nicht erfüllt, wird gemäß Teilschritt 80 eine relative Verlagerung der Messsonde 20 mit Hilfe einer Grobverlagerung ausgeführt und der Teilschritt 61 erneut durchgeführt. Es wird hierbei vereinfachend angenommen, dass eine erste Verlagerung so lange durchgeführt wird, bis die Messsonde 20 in der dargestellten, optischen Abbildung sichtbar ist, so dass eine Rückführung auf den Teilschritt 60 nicht notwendig ist.

Die Verlagerungsvorrichtung insgesamt ist bevorzugt so ausgeführt, dass einerseits mit einem. Feinverlagerungsmechanismus, beispielsweise unter Verwendung von Piezoelementen, die exakte, hochaufgelöste Abtast- oder Scanbewegung bei der rastersondenmikroskopischen Untersuchung ausgeführt werden kann. Die Positioniergenauigkeit des hierfür genutzten Feinverlagerungsmechanismus liegt üblicherweise im Submikrometerbereich, vorzugsweise im Nanometerbereich. Andererseits können Messsonde und Messprobenaufnahme grob zueinander verlagert werden mit einem Grobverlagerungsmechanismus, beispielsweise zum Herausbewegen der Messsonde aus den zur Vorabkalibrierung genutzten optischen Abbildungen.

Nun wird gemäß Teilschritt 81 zu Kalibrierungszwecken eine optische Abbildung aufgenommen und abgespeichert, vorzugsweise in Form elektronischer Digitaldaten. Es wird weiterhin in Teilschritt 62 geprüft, ob für die mittels Koordinatentransformation auszuführenden Kalibrierung eine ausreichende Anzahl von optischen Abbildungen vorhanden ist. Beispielsweise kann die Anzahl der optischen Abbildungen ausreichend sein, wenn mit der Messsonde eine vorbestimmte Anzahl von Messpositionen angefahren wurde und eine zugehörige optische Abbildung aufgenommen wurde. Ist dieses nicht der Fall, wird die Messsonde 20 gemäß Teilschritt 82 verlagert und im Teilschritt 81 erneut eine optische Abbildung aufgenommen.

Wenn die Prüfung im Teilschritt 62 zu einem positiven Ergebnis führt, wird gemäß Teilschritt 83 mittels eines geeigneten Algorithmus für jede Messsondenposition ein zugehöriger Bildpunkt in der optischen Abbildung ermittelt, welcher bei einer bevorzugten Ausgestaltung mit der an der Messsonde gebildeten Messspitze übereinstimmt. Dieses kann mit an sich bekannten Bildbearbeitungsverfahren ausgeführt werden. Alternativ kann der Benutzer zumindest einmalig eine Stelle auf der Messsonde 20 auswählen. Es kann auch vorgesehen sein, den im Teilschritt 83 ausgeführten Algorithmus im Zusammenhang mit dem Teilschritt 62 zur automatisierten oder teilautomatisierten Prüfung zu nutzen.

Wenn nun in der optischen Abbildung ein Raster von Bildpunkten vorliegt, dessen gegenseitige Abstände exakt bekannt sind, kann hieraus gemäß Teilschritt 84 eine Koordinatentransformationsvorschrift gewonnen werden, die die optische Abbildung auf die Verlagerungsbewegung der Messsonde 20 abbildet. Die Koordinatentransformation wurde somit in einer Vorabkalibrierung vor dem Durchführen rastersondenmikroskopischer Untersuchungen unter ausschließlicher Verwendung von optischen Abbildungen ermittelt.

Für den Fall, dass die Messspitze der Messsonde 20 ausreichend genau lokalisiert werden kann, kann der Ursprung der beiden Koordinatensysteme, nämlich des Koordinatensystems der optischen Abbildung und des Koordinatensystems für die Verlagerungspositionen der Messsonde gegenüber der Messprobe identisch gewählt werden.

Mit der so erhaltenen Koordinatentransformation ist es ermöglicht, die optische Abbildung gemäß Teilschritt 85 in einem Fenster auf einer Anzeigeeinrichtung darzustellen und in diesem Fenster einen Bereich auszuwählen, in dem dann eine Abbildung von rastersondenmikroskopischen Messergebnissen aufgenommen werden soll. Auch kann vorgesehen sein, dass lediglich ein Bildpunkt in der optischen Abbildung für eine Kraft-Abstands-Spektroskopie ausgewählt wird. Die Messergebnisse der Rastersondenmikroskopischen Untersuchung können dann auch in dem Fenster auf der Anzeigevorrichtung dargestellt werden. In diesem Zusammenhang kann vorgesehen sein, den verschiedenen Abbildungen unterschiedliche Farben zuzuordnen. Darüber hinaus können zumindest teiltransparente Abbildungen verwendet werden.

Wird eine optische Abbildung der Messsonde 20 aufgenommen und sind Referenzdetails sowohl in der optischen Abbildung als auch in der rastersondenmikroskopischen Abbildung zu erkennen, kann in einem Teilschritt 63 geprüft werden, ob die vorab ermittelte Koordinatentransformation ausreichend war. Ist dieses nicht der Fall, wird gemäß Teilschritt 86 eine einmalige, geringfügige Korrektur vorgenommen. Ist keine Korrektur notwendig, wird mit Teilschritt 85 fortgefahren, bis die Messprobe in Teilschritt 87 verschoben wird. Hierbei wird gemäß Teilschritt 64 geprüft, ob die Verlagerung der Messprobe, das heißt die Verschiebung des Koordinatensystems Σ₁, eine Veränderung der Optik für die Aufnahme der optischen Abbildung bewirkt. Sollte dieses der Fall sein, wird erneut eine Kalibrierung durchgeführt, wobei erneut optische Abbildungen gemäß Teilschritt 81 aufgenommen werden. Ist die Prüfung im Teilschritt 64 negativ, was beispielsweise für ein Deckgläschen oder andere übliche Baugruppen in der Abbildungsoptik der Fall sein wird, kann in Teilschritt 85 die alte optische Abbildung durch eine neue optische Abbildung ersetzt werden. Hierbei kann vorgesehen sein, dass eine Live-Abbildung im Hintergrund dargestellt wird.

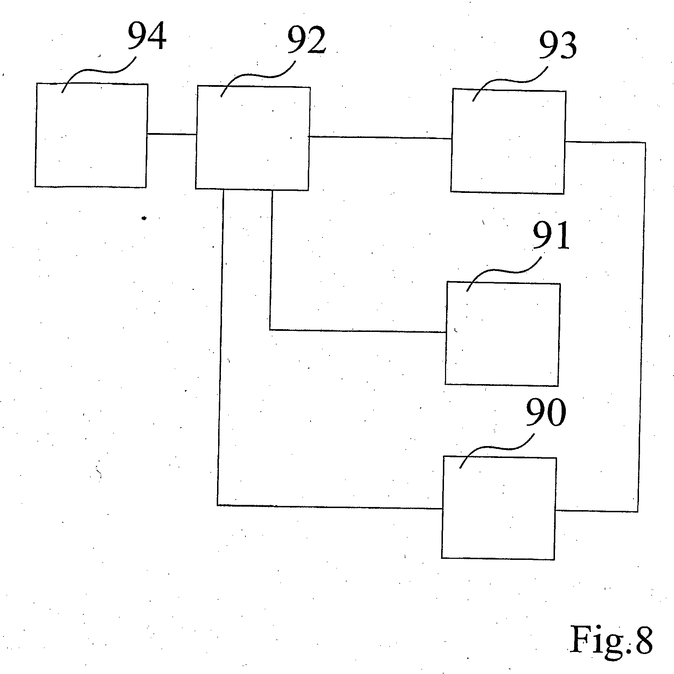

Fig. 8 zeigt eine schematische Darstellung eines Messsystems mit einem Rastersondenmikroskop 90 und einer Aufnahmeeinrichtung 91, die konfiguriert ist, optische Abbildungen von Abschnitten einer mit dem Rastersondenmikroskop 90 zu untersuchenden Messprobe aufzunehmen. Diese Aufnahmeeinrichtung 91 kann zum Beispiel ein mit einer CCD-Kamera ausgerüstetes Mikroskop sein. An die Aufnahmeeinrichtung 91 ist eine Anzeigevorrichtung 92 gekoppelt, beispielsweise ein Bildschirm oder ein Monitor in Verbindung mit einem Computer, die konfiguriert ist, die mit Hilfe der Aufnahmeeinrichtung 91 aufgenommenen, optischen Abbildungen anzuzeigen. Darüber hinaus ist die Anzeigevorrichtung 92 dafür eingerichtet, auch Messergebnisse der rastersondenmikroskopischen Untersuchung anzuzeigen, bevorzugt in Form sich überlagernder Darstellungen, nämlich beispielsweise eine optische Abbildung und eine Abbildung des Rastersondenmikroskops in demselben Koordinatensystem Die Anzeigevorrichtung 92 ist an eine Steuervorrichtung 93 gekoppelt, so dass vom Benutzer mit Hilfe einer Eingabevorrichtung 94, die wahlweise in das Rastersondenmikroskop 90 oder die Aufnahmeeinrichtung 91 integriert sein kann, getroffene Auswahlen von Positionen in den dargestellten optischen Abbildungen erfasst werden können. Die Steuervorrichtung 93 ist beispielsweise von einem Computerprogramm gebildet. Die Eingäbevorrichtung ist zweckmäßigerweise eine Computermaus oder eine Tastatur. Während einer rastersondenmikroskopischen Untersuchung erzeugt die Steuervorrichtung 93 hierauf dann elektrische Steuersignale, die an die Verlagerungseinrichtung des Rastersondenmikroskops 90 gegeben werden, um Messprobe und Messsonde entsprechend zu positionieren.

Die in der vorstehenden Beschreibung, den Ansprüchen, und den Zeichnungen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Betreiben eines Messsystems mit einem Rastersondenmikroskop, insbesondere einem Rasterkraftmikroskop, bei dem:
- eine optische Abbildung eines Messabschnitts einer zu untersuchenden Messprobe (10) mit Hilfe einer optischen Aufnahmeeinrichtung (91) aufgenommen wird,
- die optische Abbildung gemäß einer zuvor ermittelten Koordinatentransformation transformiert wird, die eine Zuordnung zwischen einem Koordinatensystem der optischen Abbildung und einem Koordinatensystem eines von Verlagerungspositionen der Messsonde (20) und der Messprobe (10) aufgespannten Raumes bildet, und die transformierte optische Abbildung auf einer Anzeigevorrichtung (92) dargestellt wird,
- eine Auswahl einer Position in der transformierten optischen Abbildung erfasst wird und
- für eine Rastersondenmessung eine Messsonde (20), die für die Rastersondenmessung konfiguriert ist, mittels einer die Messsonde (20) und die Messprobe (10) relativ zueinander bewegenden Verlagerungsvorrichtung zu einer Messposition verlagert wird, die der in der transformierten optischen Abbildung ausgewählten Position gemäß der Koordinatentransformation zugeordnet ist, indem die Verlagerungsvorrichtung der Koordinatentransformation entsprechend gesteuert wird.

2. Verfahren nach Anspruch 1, **dadurch gekennzeichnet, dass** ein Rastersondenmesswert für die Messposition erfasst wird, indem beim Verlagern in die Messposition eine an der Messsonde (20) gebildet Messspitze in die Messposition gebracht wird.

3. Verfahren nach Anspruch 1 oder 2, **dadurch gekennzeichnet, dass** die Messsonde (20) zumindest teilweise in der optischen Abbildung auf der Anzeigevorrichtung (92) dargestellt wird.

4. Verfahren nach Anspruch 1 oder 2, **dadurch gekennzeichnet, dass** der Messabschnitt in der optischen Abbildung ohne die Messsonde (20) dargestellt wird.

5. Verfahren nach einem der vorangehenden Ansprüche, **dadurch gekennzeichnet, dass** als optische Abbildung eine momentane optische Aufnahme in einer Live-Betriebsart dargestellt wird.

6. Verfahren nach einem der vorangehenden Ansprüche, **dadurch gekennzeichnet, dass** auf der Anzeigevorrichtung (92) zumindest ein Rastersondenmessbild mit Rastersondenmesswerten dargestellt wird, wahlweise in einer wenigstens teilweise überlagernden Darstellung von optischer Abbildung und Rastersondenmessbild entsprechend der Koordinatentransformation.

7. Verfahren nach einem der vorangehenden Ansprüche, **dadurch gekennzeichnet, dass** die Darstellung der optischen Abbildung des Messabschnitts auf der Anzeigevorrichtung (92) wiederholt erneuert wird.

8. Verfahren nach einem der vorangehenden Ansprüche, **dadurch gekennzeichnet, dass** die Koordinatentransformation ermittelt wird, indem ein oder mehrere Bildpunkte aus einem oder mehreren zuvor aufgenommenen optischen Abbildungen einerseits und zugehörige Messpositionen in der Anordnung von Messsonde (20) und Messprobe (10) andererseits miteinander verglichen werden und hieraus für die Koordinatentransformation eine verallgemeinerte Transformationsregel abgeleitet wird.

9. Verfahren nach Anspruch 8, **dadurch gekennzeichnet, dass** die eine oder die mehreren zuvor aufgenommenen optischen Abbildungen sowie die transformierten optischen Abbildungen als mindestens eine Abbildungsart ausgewählt aus der folgenden Gruppe von Abbildungsarten aufgenommen werden: Fluoreszenz-Abbildung, Durchlichtabbildung und Ramanspektroskopie-Abbildung.

10. Messsystem zum rastersondenmikroskopischen und zum optischen Untersuchen einer Messprobe (10), mit:
- einem Rastersondenmikroskop, an dem eine Messsonde (20) gebildet ist,
- einer Aufnahmeeinrichtung (91), die konfiguriert ist, optische Abbildungen von Messabschnitten einer mittels der Messsonde (20) im Rahmen einer Rastersondenmessung zu untersuchenden Messprobe (10) aufzunehmen,
- einer Steuervorrichtung (93), die konfiguriert ist, die optischen Abbildungen gemäß einer zuvor ermittelten Koordinatentransformation zu transformieren, die eine Zuordnung zwischen einem Koordinatensystem der optischen Abbildungen und einem Koordinatensystem eines von Verlagerungspositionen der Messsonde (20) und der Messprobe (10) aufgespannten Raumes bildet,
- einer Anzeigevorrichtung (92), die an die optische Aufnahmeeinrichtung (91) und die Steuervorrichtung (93) gekoppelt ist und konfiguriert ist, die transformierten optischen Abbildungen darzustellen und
- einer Verlagerungsvorrichtung, die konfiguriert ist, die Messsonde (20) und die zu untersuchende Messprobe (10) relativ zueinander zu bewegen, und
wobei die Steuervorrichtung (93) weiterhin an die Verlagerungseinrichtung gekoppelt ist und konfiguriert ist, für die Rastersondenmessung nach dem Erfassen einer Auswahl einer Position in einer auf der Anzeigevorrichtung (92) dargestellten, transformierten optischen Abbildung Steuersignale für die Verlagerungsvorrichtung zu erzeugen, mit denen die Messsonde (20) in eine Messposition verlagert wird, die der in der transformierten optischen Abbildung ausgewählten Position gemäß der Koordinatentransformation zugeordnet ist.

11. Messsystem nach Anspruch 10, **dadurch gekennzeichnet, dass** das Rastersondenmikroskop ein Rasterkraftmikroskop, ein Rasternahfeldmikroskop oder ein Rasterphotonenmikroskop ist.

12. Messsystem nach Anspruch 10 oder 11, **dadurch gekennzeichnet, dass** die Steuervorrichtung (93) konfiguriert ist, die Zuordnung zwischen dem Koordinatensystem der optischen Abbildung und dem Koordinatensystem des von Verlagerungspositionen der Messsonde (20) und der Messprobe (10) aufgespannten Raumes in einem Vorabkalibrierungsverfahren zu erfassen.

## Claims

1. A method for operating a measurement system with a scanning probe microscope, particularly an atomic force microscope, wherein:
- an optical image of a measurement section of a measurement sample (10) to be examined is recorded by an optical recording device (91),
- the optical image is transformed according to a previously determined coordinate transformation, which is a assignment between a coordinate system of the optical image and a coordinate system of a space covered by movement positions of a measurement probe (20) and a measurement sample (10), and the transformed optical image is displayed on a display apparatus (92),
- a selection of a position in the transformed optical image is detected and
- for a scanning probe measurement, a measurement probe (20) that is configured for the scanning probe measurement is moved, by means of a movement apparatus that moves the measurement probe (20) and the measurement sample (10) relative to one another, to a measurement position which is assigned to the selected position in the transformed optical image according to the coordinate transformation by controlling the movement apparatus in accordance with the coordinate transformation.

2. The method according to Claim 1, **characterized in that** a scanning probe measurement value is detected for the measurement position by a measurement tip formed on the measurement probe (20) being brought into the measurement position during the movement into the measurement position.

3. The method according to Claims 1 or 2, **characterized in that** the measurement probe (20) is displayed at least partially in the transformed optical image on the display apparatus (92).

4. The method according to Claims 1 or 2, **characterized in that** the measurement section in the transformed optical image is displayed without the measurement probe (20).

5. The method according to any one of the preceding Claims, **characterized in that** a momentary optical recording is displayed as transformed optical image in a live operating mode.

6. The method according to any one of the preceding Claims, **characterized in that**, on the display device (92), at least one scanning probe measurement image with scanning probe measurement values is shown, selectively in an at least partially superimposing presentation of the transformed optical image and scanning probe measurement image according to the coordinate transformation.

7. The method according to any one of the preceding Claims, **characterized in that** the presentation of the transformed optical image of the measurement section on the display device (92) is repeatedly renewed.

8. The method according to any one of the preceding Claims, **characterized in that** the coordinate transformation is determined by comparing one or several previously recorded image points from one or several optical images, on the one hand, and corresponding measurement positions in the arrangement of measurement probe (20) and measurement sample (10), on the other hand, with one another from which a generalised transformation rule is derived for the coordinate transformation.

9. The method according to Claim 8, **characterized in that** the one or the several previously recorded optical images and the transformed optical image are recorded as at least one imaging type selected from the following group of image types: fluorescence image, back-lighting image and Raman spectroscopic image.

10. A measurement system for scanning probe microscopic and optical examination of a measurement sample (10), with:
- a scanning probe microscope, at which a measurement probe (20) is formed,
- a recording device (91) that is configured for recording optical images of measurement sections of a measurement sample (10) under examination by means of the measurement probe (20) within the framework of a scanning probe measurement,
- a control apparatus (93) which is configured for transforming the optical images according to a previously determined coordinate transformation, which is an assignment between a coordinate system of the optical images and a coordinate system of a space covered by movement positions of the measurement probe (20) and the measurement sample (10),
- a display apparatus (92) which is coupled to the optical recording device (91) as well as the control device (93) and which is configured to display the transformed optical images, and
- a movement apparatus which is configured for moving the measurement probe (20) and the measurement sample (10) under examination relative to one another,
wherein the control apparatus (93) is further coupled to the movement device and is configured to generate control signals for the movement apparatus for the scanning probe measurement after the detection of a selection of a position in the transformed optical images displayed on the display apparatus, with which the measurement probe (20) is moved into a measurement position that is assigned to the position selected in the transformed optical images according to the coordinate transformation.

11. The measurement system according to Claim 10, **characterized in that** the scanning probe microscope is an atomic force microscope, a scanning nearfield microscope or a scanning photon microscope.

12. The measurement system according to Claims 10 or 11, **characterized in that** the control device (93) is configured to detect the assignment between the coordinate system of the optical image and the coordinate system of the space covered by the movement positions of the measurement probe (20) and the measurement sample (10) in a pre-calibration process.

## Revendications

1. Procédé destiné à faire fonctionner un système de mesure avec un microscope à sonde de balayage, notamment un microscope à force atomique, lors duquel :
- une reproduction optique d'une portion de mesure d'une éprouvette de mesure (10) est enregistrée à l'aide d'un dispositif d'enregistrement (91) optique,
- la reproduction optique est transformée selon une transformation de coordonnées déterminée auparavant, qui forme une affection entre un système de coordonnées de la reproduction optique et un système de coordonnées d'un espace formé par des positions de déplacement de la sonde de mesure (20) et de l'éprouvette de mesure (10) et la reproduction optique transformée est représentée sur un dispositif d'affichage (92),
- une sélection d'une position est détectée dans la reproduction optique transformée et
- pour une mesure par sonde de balayage, une sonde de mesure (20) qui est configurée pour la mesure par sonde de balayage est déplacée au moyen d'un dispositif de déplacement déplaçant la sonde de mesure (20) et l'éprouvette de mesure (10) l'une par rapport à l'autre vers une position de mesure qui est affectée à la position choisie dans la reproduction optique transformée selon la transformation de coordonnées, en ce que le dispositif de déplacement de la transformation de coordonnées est commandé en conséquence.

2. Procédé selon la revendication 1, **caractérisé en ce qu'**il est détecté une valeur de mesure par sonde de balayage pour la position de mesure, **en ce que** lors du déplacement dans la position de mesure, une pointe de mesure formée sur la sonde de mesure (20) est amenée dans la position de mesure.

3. Procédé selon la revendication 1 ou la revendication 2, **caractérisé en ce que** la sonde de mesure (20) est représentée au moins en partie dans la reproduction optique sur le dispositif d'affichage (92).

4. Procédé selon la revendication 1 ou la revendication 2, **caractérisé en ce que** la portion de mesure est représentée dans la reproduction optique sans la sonde de mesure (20).

5. Procédé selon l'une quelconque des revendications précédentes, **caractérisé en ce qu'**en tant que reproduction optique, un enregistrement optique instantané est représenté en mode Live.

6. Procédé selon l'une quelconque des revendications précédentes, **caractérisé en ce que** sur le dispositif d'affichage (92) est représentée au moins une image mesurée par sonde à balayage avec des valeurs mesurées à la sonde à balayage, au choix dans une représentation superposée au moins en partie de la reproduction optique et de l'image mesurée par sonde à balayage, en fonction de la transformation de coordonnées.

7. Procédé selon l'une quelconque des revendications précédentes, **caractérisé en ce que** la représentation de la reproduction optique de la portion de mesure est renouvelée de manière répétée sur le dispositif d'affichage (92).

8. Procédé selon l'une quelconque des revendications précédentes, **caractérisé en ce que** la transformation de coordonnées est déterminée, **en ce qu'**un ou plusieurs pixels d'une ou de plusieurs reproductions optiques enregistrées précédemment d'une part et des positions de mesure associées dans l'agencement de sonde de mesure (20) et d'éprouvette de mesure (10) d'autre part sont comparés entre eux et **en ce qu'**il en est dérivé une règle de transformation généralisée pour la transformation de coordonnées.

9. Procédé selon la revendication 8, **caractérisé en ce que** l'une ou les plusieurs reproductions optiques enregistrées auparavant, ainsi que les reproductions transformées sont enregistrées en tant qu'au moins un type de reproduction choisi dans le groupe suivant de types de reproduction : reproduction par fluorescence, reproduction par lumière transmise et reproduction par spectroscopie Raman.

10. Système de mesure pour l'analyse par microscope à sonde de balayage et l'analyse optique d'une éprouvette de mesure (10), avec :
- un microscope à sonde de balayage, sur lequel est formée une sonde de mesure (20),
- un dispositif d'enregistrement (91) qui est configuré pour enregistrer des reproductions optiques de portions de mesure d'une éprouvette de mesure (10) qui doit être analysée au moyen de la sonde de mesure (20) dans le cadre d'une mesure par sonde de balayage,
- un dispositif de commande (93) qui est configuré pour transformer les reproductions optiques selon une transformation de coordonnées déterminée auparavant, qui créé une affectation entre un système de coordonnées des reproductions optiques et un système de coordonnées d'un espace formé par des positions de déplacement de la sonde de mesure (20) et de l'éprouvette de mesure (10),
- un dispositif d'affichage (92) qui est couplé au dispositif d'enregistrement (91) optique et au dispositif de commande (93) et qui est configuré pour représenter les reproductions optiques transformées et
- un dispositif de déplacement qui est configuré pour déplacer l'une par rapport à l'autre la sonde de mesure (20) et l'éprouvette de mesure (10) qui doit être analysée et
le dispositif de commande (93) étant couplé par ailleurs sur le dispositif de déplacement et pour la mesure par sonde de balayage, étant configuré pour générer après la détection d'une sélection d'une position dans une reproduction optique transformée des signaux de commande, représentée sur le dispositif d'affichage (92) pour le dispositif de déplacement, à l'aide desquels la sonde de mesure (20) est déplacée dans une position de mesure qui est affectée à la position choisie dans la reproduction optique transformée selon la transformation de coordonnées.

11. Système de mesure selon la revendication 10, **caractérisé en ce que** le microscope à sonde de balayage est un microscope à force atomique, un microscope à balayage de puissance ou un microscope à balayage photons.

12. Système de mesure selon la revendication 10 ou la revendication 11, **caractérisé en ce que** le dispositif de commande (93) est configuré pour détecter lors d'un procédé de calibrage préalable l'affectation entre le système de coordonnées de la reproduction optique et le système de coordonnées de l'espace formé par des positions de déplacement de la sonde de mesure (20) et de l'éprouvette de mesure (10).
